# EUROPEAN PATENT APPLICATION

(11) **EP 3 398 677 A1**
(43) Date of publication of application: **07.11.2018**
(21) Application number: 17169241.1
(22) Date of filing: 03.05.2017
(51) Int. Cl.: B01J 20/283, B01J 20/28, B01J 20/32, C02F 1/28, C02F 1/44, C02F 101/10

(54) **GLYCIDOL MODIFIED SILICA FOR REMOVING BORON FROM WATER**

(71) Applicant: BASF SE, 67056 Ludwigshafen am Rhein (DE); National University of Singapore, Singapore 119077 (SG)
(72) Inventor: WEBER, Martin, 67056 Ludwigshafen (DE); BERG, Peter, 86926 Greifenberg (DE); EBERIUS, Karin, 67056 Ludwigshafen (DE); TANG, Yupan, 117576 Singapore (SG); CHUNG, Tai-Shung, 119077 Singapore (SG)
(74) Representative: BASF IP Association

(57) **Abstract**

The present invention refers to a method for removing a boron containing compound from an aqueous system comprising contacting the aqueous system to a modified silica particle of the formula (I) 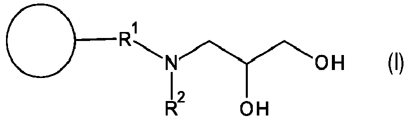 wherein R¹ is C₁-C₁₂ alkylene, or C₁-C₁₂ heteroalkylene; and R² is H, -CH₂-CH(OH)-CH₂(OH), or mixtures thereof. The invention further relates to the modified silica particle of the formula (I); to a process for preparing the modified silica particle of the formula (I) by reacting glycidol with the amino modified silica particle of the formula; to a membrane comprising the modified silica particle of the formula (I); and to a process for preparing a membrane comprising the modified silica particle of the formula (I) comprising incorporating the modified silica particles into the membrane.

## Description

The present invention refers to a method for removing a boron containing compound from an aqueous system comprising contacting the aqueous system to a modified silica particle of the formula (I) 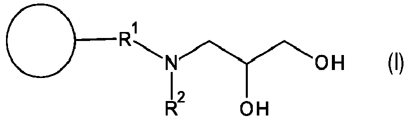 wherein R¹ is C₁-C₁₂ alkylene, or C₁-C₁₂ heteroalkylene; and R² is H, -CH₂-CH(OH)-CH₂(OH), or mixtures thereof. The invention further relates to the modified silica particle of the formula (I); to a process for preparing the modified silica particle of the formula (I) by reacting glycidol with the amino modified silica particle of the formula; to a membrane comprising the modified silica particle of the formula (I); and to a process for preparing a membrane comprising the modified silica particle of the formula (I) comprising incorporating the modified silica particles into the membrane. The preferred embodiments of the invention mentioned herein below have to be understood as being preferred either independently from each other or in combination with one another.

As an element ubiquitous in nature, boron is distributed in various water bodies often in the form of boric acid. Boron plays an important role in inter alia cell membrane formation and function, enzyme interaction, carbohydrate metabolism. In industries, the main applications of boron compounds are in the production of fiberglass, detergents and fuel cells. However, it can be toxic when its amount reaches a certain level. In recent years, the boron content in both surface and ground water was found to be increased significantly as a result of anthropogenic activities, which reinstated boron as an inevitable contaminant in various water supplies.

As a potential contaminant in water and yet an important industrial raw material, it is desirable that boron be reclaimed from wastewater and seawater. At present, there is no effective and economic method to separate boron compounds from wastewater, especially from neutral solutions where undissociated boric acid molecules behave very similarly to water molecules.

To date, technologies including reverse osmosis (RO), electrodialysis (ED), ion exchange and electro-/chemical coagulation have shown their potential to separate boron compounds from water. However, most of these techniques have certain limitations. For example, the boron rejection of RO membranes is highly susceptible to feed properties (e.g. pH, salinity, etc.) and operating pressure. Similarly in electrodialysis, the presence of other ions such as Cl⁻ and NO₃⁻ may cause a negative effect on boron separation. The chemical precipitation process has been employed to treat high concentration boron solutions. However, such processes require long operating time and high reaction temperature and produce a huge amount of solid waste.

Object of the present invention was to overcome the problems of the state of the art for removing boron containing compounds from aqueous systems.

### Fig.1-4

The object was solved by a method for removing a boron containing compound from an aqueous system comprising contacting the aqueous system to a modified silica particle of the formula (I) 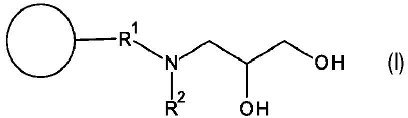 wherein
R¹ is C₁-C₁₂ alkylene, or C₁-C₁₂ heteroalkylene; and
R² is H, -CH₂-CH(OH)-CH₂(OH), or mixtures thereof.

The invention further relates to a modified silica particle of the formula (I).

Typically, the modified silica particle contains a **silica particle** which was chemically modified. In general silica particles have silanol (Si-OH) groups on the surface of the particles. These silanol groups may be chemically reacted with various reagents to chemically modify the silica. In the formula (I) the silica particle may represented by the circle.

The **particle size** of the silica particles is in general in the range from 5 nm to 500 µm, preferably from 10 nm to 200 µm, in particular from 20 nm to 100 µm. In another form the particle size of the silica particles is in general in the range up to 500 µm, preferably up to 200 µm, in particular up to 100 µm. The particle size usually designates the mean particle diameter which is determined according to the volume fraction from the particle size distribution. Said particle size distributions can be measured by dynamic light scattering (for example on a Zetasizer Nano S apparatus from Malvern Instruments).

In a preferred from the membrane comprises the modified silica particles, wherein the particle size of the silica particles is in the range up to 50 µm, preferably up to 10 µm, in particular up to 500 nm.

**R²** is H, -CH₂-CH(OH)-CH₂(OH), or mixtures thereof. Preferably, R² is a mixture of H and CH₂-CH(OH)-CH₂(OH).

**R¹** is C₁-C₁₂ alkylene or C₁-C₁₂ heteroalkylene, wherein C₁-C₁₂ alkylene is preferred. Preferably, **R¹** is C₁-C₈ alkylene or C₁-C₈ heteroalkylene. The C₁-C₁₂ alkylene or C₁-C₁₂ heteroalkylene my be linear, branched or cyclic, wherein linear is preferred.

In a preferred form, R¹ is C₁-C₈ alkylene (preferably linear), more preferably C₂-C₆ alkylene (preferably linear), and in particular -CH₂-CH₂- or -CH₂-CH₂-CH₂-.

Suitable C₁-C₁₂ heteroalkylene are C₁-C₁₂ alkylene, where 1, 2 or 3 of the carbon atoms are substituted by a heteroatom, such as oxygen, nitrogen or sulphur (wherein nitrogen is preferred). For example, -CH₂-CH₂-CH₂-NH-CH₂-CH₂- may be mentioned, where the propyl group may be oriented towards the silica particle.

R¹ is usually bound with at least one -Si-O- unit to the silica particle, e.g. as shown in the following Scheme 1.

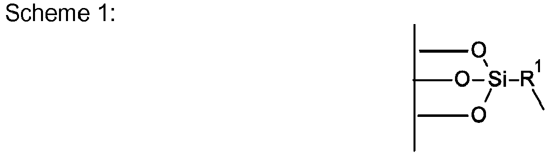

In a preferred form R¹ is C₁-C₈ alkylene, and R² is a mixture of H and CH₂-CH(OH)-CH₂(OH). In a more preferred form R¹ is C₂-C₆ alkylene (preferably linear), and R² is a mixture of H and CH₂-CH(OH)-CH₂(OH).

The modified silica particles are usually **obtainable** by reacting glycidol with an amino modified silica particle of the formula (II) 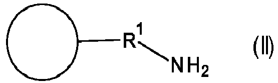 wherein R¹ has the definition in formula (I). R¹ is usually bound with at least one -Si-O- unit to the silica particle, e.g. as shown in the Scheme 1. In the formula (II) the silica particle may represented by the circle.

The invention further relates to a process for **preparing** the modified silica particle of the formula (I) by reacting glycidol with the amino modified silica particle of the formula (II).

**Glycidol** is also known as oxiranylmethanol or 2,3-epoxy-1-propanol. The molar ratio of the glycidol to the amino groups of the silica particles in the formula (II) is in the range from 1:2 to 20:1, preferably in the range from 1:1.5 to 12:1, and in particular in the range from 2:1 to 7:1.

The reacting of the glycidol with the amino modified silica particle of the formula (II) may by done at 0 to 100 °C, preferably at 15 to 80 °C. The reacting is usually made in water. The progress of the modification may be monitored by XPS core-level spectra.

The **amino modified silica particle** of the formula (II) are commercially available. Typically, it is obtainable by the reaction of the silica particle (such as the hydroxy groups on the surface of the silica particle) with (amino-C₁-C₁₂-alkyl)triethoxysilane. In a preferred form the amino modified silica particle with R₁ = -CH₂-CH₂-CH₂- is obtainable by the reaction of the silica particle with (3-aminopropyl)triethoxysilane.

Suitable **boron containing compounds** are boric acid or borate, wherein boric acid is preferred.

Boric acid can inter alia be present as different species like B(OH)₃ or H₃O⁺B(OH)₄⁻, depending on the pH of the aqueous system. Suitalbe borates are salts or esters of boric acid, e.g. sodium borate or trimethylborate.

An **aqueous system** is typically a solution, dispersion, suspension or emulsion that contain at least 50% by weight of water, preferably at least 70% by weight, more preferably at least 90 % by weight and particularly at least 95 % or 99 % by weight. In one embodiment, aqueous systems comprise only water as a solvent. Examples of an aqueous system is industrial waste water (for example from nuclear energy facilities or from the production of fiberglass, detergents or fuel cells), sea water, surface water, or ground water.

The aqueous system normally comprises the boron containing compound in an amount of 0.01 to 1000 ppm by weight (calculated as boron), preferably 0.1 to 500 ppm by weight, and in particular 0.2 to 200 ppm by weight.

Typically, more than 20%, preferably more than 50%, more preferably more than 70%, and in particular more than 90% of the boron containing compound is removed from the aqueous system.

Preferably the contacting of the aqueous system to the modified silica particle is carried out at a **pH** of 5 to 10, preferably 6 to 9.5, even more preferably 6.9 to 9.

Preferably the contacting of the aqueous system to the modified silica particle is carried at a **temperature** from 1 °C to 95 °C, preferably 20 to 70 °C, more preferably 25 to 60 °C.

In a preferred form the contacting of the aqueous system to the modified silica particle is made by **filtrating** the aqueous system with a membrane comprising the modified silica particles.

The invention further relates to a **membrane** comprising the modified silica particle of the formula (I). The membrane may have high boron chelation capacity. The membranes are also typically known as adsorptive membranes, which may combine the sorption and filtration steps into a single operation to simplify the operation. The membrane regeneration could be easily achieved by acid wash.

Suitable **membranes** are ultrafiltration membranes UFM, nanofiltration membranes NFM, or microfiltration membranes MFM. Preferred membranes are ultrafiltration membranes and nanofiltration membranes.

The membrane usually have pores, wherein the pores might have an average pore diameter of 0.5 nm to 10 µm. Typical pore diameters of the various membrane types are given below.

**Ultrafiltration (UF) membranes UFM** are normally suitable for removing suspended solid particles and solutes of high molecular weight, for example above 5000 Da. In particular, UF membranes UFM are normally suitable for removing bacteria and viruses and polymers.

UF membranes UFM may comprise pores having an average pore diameter of 2 nm to 50 nm, preferably 5 to 40 nm, more preferably 5 to 20 nm.

In one embodiment, UF membranes UFM comprise as the main component at least one polyamide (PA), polyvinylalcohol (PVA), Cellulose Acetate (CA), Cellulose Triacetate (CTA), CA-triacetate blend, Cellulose ester, Cellulose Nitrate, regenerated Cellulose, aromatic , aromatic/aliphatic or aliphatic Polyamide, aromatic, aromatic/aliphatic or aliphatic Polyimide, Polybenzimidazole (PBI), Polybenzimidazolone (PBIL), Polyacrylonitrile (PAN), PAN-poly(vinyl chloride) copolymer (PAN-PVC), PAN-methallyl sulfonate copolymer, Poly(dimethylphenylene oxide) (PPO), Polycarbonate, Polyester, Polytetrafluroethylene PTFE, Poly(vinylidene fluoride) (PVDF), Polypropylene (PP), Polyelectrolyte complexes, Poly(methyl methacrylate) PMMA, Polydimethylsiloxane (PDMS), aromatic, aromatic/aliphatic or aliphatic polyimide urethanes, aromatic, aromatic/aliphatic or aliphatic polyamidimides, crosslinked polyimides or polyarylene ether, polysulfone, polyphenylenesulfone, or polyethersulfone, or mixtures thereof.

In one embodiment, UF membranes UFM comprise as the main component at least one polyethersulfone, polysulfone, polyphenylenesulfone, polyvinylidenedifluoride, celluloseacetate, or polyacrylonitrile, polyimide, polyetherimide, polyamide, polyamide-imide, polybenzimidazole, polyether ether ketone or cellulose acetate.

In another embodiment of the invention, UF membranes UFM comprise as the main component at least one PVDF, polysulfone, polyphenylenesulfone and/or polyethersulfone.

In one embodiment, UF membranes UFM comprise further additives like polyvinyl pyrrolidones or polyalkylene oxides like polyethylene oxides.

In a preferred embodiment, UF membranes UFM comprise as major components polysulfones, polyphenylenesulfone or polyethersulfone in combination with further additives like polyvinylpyrrolidone.

In one preferred embodiment, UF membranes UFM comprise 99.9 to 50% by weight of a combination of polyethersulfone and 0.1 to 50 % by weight of polyvinylpyrrolidone.

In another embodiment UF membranes UFM comprise 95 to 80% by weight of polyethersulfone and 5 to 15 % by weight of polyvinylpyrrolidone.

In one embodiment of the invention, UF membranes UFM are present as spiral wound membranes, as pillows or flat sheet membranes. In another embodiment of the invention, UF membranes UFM are present as tubular membranes. In another embodiment of the invention,

UF membranes UFM are present as hollow fiber membranes or capillaries. In yet another embodiment of the invention, UF membranes UFM are present as single bore hollow fiber membranes.

In yet another embodiment of the invention, UF membranes UFM are present as **multibore hollow fiber membranes.** Multiple channel membranes, also referred to as multibore membranes, comprise more than one longitudinal channels also referred to simply as "channel". In a preferred embodiment, the number of channels is typically 2 to 19. In one embodiment, multiple channel membranes comprise two or three channels. In another embodiment, multiple channel membranes comprise 5 to 9 channels. In one preferred embodiment, multiple channel membranes comprise seven channels. In another embodiment the number of channels is 20 to 100.

Normally, such channels have a diameter (for essentially circular diameters), smaller diameter (for essentially ellipsoid diameters) or smaller feed size (for essentially rectangular diameters) of 0.05 mm to 3 mm, preferably 0.5 to 2 mm, more preferably 0.9 to 1.5 mm. In another preferred embodiment, such channels have a diameter (for essentially circular diameters), smaller diameter (for essentially ellipsoid diameters) or smaller feed size (for essentially rectangular diameters) in the range from 0.2 to 0.9 mm. The wall thickness in such multiple channel membranes is normally from 0.02 to 1 mm at the thinnest position, preferably 30 to 500 µm, more preferably 100 to 300 µm. Normally, membranes M have an essentially circular, ellipsoid or rectangular diameter. Preferably, membranes M are essentially circular. In one preferred embodiment, membranes have a diameter (for essentially circular diameters), smaller diameter (for essentially ellipsoid diameters) or smaller feed size (for essentially rectangular diameters) of 2 to 10 mm, preferably 3 to 8 mm, more preferably 4 to 6 mm. In another preferred embodiment, membranes M have a diameter (for essentially circular diameters), smaller diameter (for essentially ellipsoid diameters) or smaller feed size (for essentially rectangular diameters) of 2 to 4 mm. In one embodiment the rejection layer is located on the inside of each channel of said multiple channel membrane.

In one embodiment multibore membranes are designed with pore sizes between 0.2 and 0.01 µm. In such embodiments the inner diameter of the capillaries can lie between 0.1 and 8 mm, preferably between 0.5 and 4 mm and particularly preferably between 0.9 and 1.5 mm. The outer diameter of the multibore membrane can for example lie between 1 and 26 mm, preferred 2.3 and 14 mm and particularly preferred between 3.6 and 6 mm. Furthermore, the multibore membrane can contain 2 to 94, preferably 3 to 19 and particularly preferred between 3 and 14 channels. Often multibore membranes contain seven channels. The permeability range can for example lie between 100 and 10000 L/m²hbar, preferably between 300 and 2000 L/m²hbar.

Typically multibore membranes of the type described above are manufactured by extruding a polymer, which forms a semi-permeable membrane after coagulation through an extrusion nozzle with several hollow needles. A coagulating liquid is injected through the hollow needles into the extruded polymer during extrusion, so that parallel continuous channels extending in extrusion direction are formed in the extruded polymer. Preferably the pore size on an outer surface of the extruded membrane is controlled by bringing the outer surface after leaving the extrusion nozzle in contact with a mild coagulation agent such that the shape is fixed without active layer on the outer surface and subsequently the membrane is brought into contact with a strong coagulation agent. As a result a membrane can be obtained that has an active layer inside the channels and an outer surface, which exhibits no or hardly any resistance against liquid flow. Herein suitable coagulation agents include solvents and/or non-solvents. The strength of the coagulations may be adjusted by the combination and ratio of non-solvent/solvent. Coagulation solvents are known to the person skilled in the art and can be adjusted by routine experiments. An example for a solvent based coagulation agent is N-methylpyrrolidone. Non-solvent based coagulation agents are for instance water, iso-propanol and propylene glycol.

**Nanofiltration (NF) membranes NFM** are normally especially suitable for removing multivalent ions and large monovalent ions. Typically, NF membranes NFM function through a solution/diffusion or/and filtration-based mechanism. NF membranes NFM typically have an average pore of 0.5 to 5 nm. NF membranes NFM are normally used in crossflow filtration processes.

In one embodiment, NF membranes NFM comprise as the main component at least one polyamide (PA), polyvinylalcohol (PVA), Cellulose Acetate (CA), Cellulose Triacetate (CTA), CA-triacetate blend, Cellulose ester, Cellulose Nitrate, regenerated Cellulose, aromatic , aromatic/aliphatic or aliphatic Polyamide, aromatic, aromatic/aliphatic or aliphatic Polyimide, Polybenzimidazole (PBI), Polybenzimidazolone (PBIL), Polyacrylonitrile (PAN), PAN-poly(vinyl chloride) copolymer (PAN-PVC), PAN-methallyl sulfonate copolymer, Poly(dimethylphenylene oxide) (PPO), Polycarbonate, Polyester, Polytetrafluroethylene (PTFE), Poly(vinylidene fluoride) (PVDF), Polypropylene (PP), Polyelectrolyte complexes, Poly(methyl methacrylate) PMMA, Polydimethylsiloxane (PDMS), aromatic, aromatic/aliphatic or aliphatic polyimide urethanes, aromatic, aromatic/aliphatic or aliphatic polyamidimides, crosslinked polyimides or polyarylene ether, polysulfone, polyphenylenesulfone or polyethersulfone, or mixtures thereof. In another embodiment of the invention, NF membranes NFM comprise as the main component at least one polysulfone, polyphenylenesulfone and/or polyethersulfone. In a particularly preferred embodiment, the main components of a NF membrane NFM are positively or negatively charged. Nanofiltration membranes NFM often comprise charged polymers comprising sulfonic acid groups, carboxylic acid groups and/or ammonium groups in combination with block copolymers. In another embodiment, NF membranes NFM comprise as the main component polyamides, polyimides or polyimide urethanes, polyetheretherketone (PEEK) or sulfonated polyetheretherketone (SPEEK).

**MF membranes MFM** are normally suitable for removing particles with a particle size of 0.1 µm and above. Microfiltration systems are designed to remove suspended solids down to 0.1 micrometers in size, in a feed solution with up to 2-3% in concentration.

MF membranes MFM normally have an average pore diameter of 0.05 µm to 10 µm, preferably 1.0 µm to 5 µm.

Microfiltration can use a pressurized system but it does not need to include pressure. MF membranes MFM can be capillaries, hollow fibers, flat sheet, tubular, spiral wound, pillows, hollow fine fiber or track etched. They are porous and allow water, monovalent species (Na+, CI-), dissolved organic matter, small colloids and viruses through but retain particles, sediment, algae or large bacteria.

In one embodiment, MF membranes MFM comprise as the main component at least polyamide (PA), polyvinylalcohol (PVA), Cellulose Acetate (CA), Cellulose Triacetate (CTA), CA-triacetate blend, Cellulose ester, Cellulose Nitrate, regenerated Cellulose, aromatic , aromatic/aliphatic or aliphatic Polyamide, aromatic, aromatic/aliphatic or aliphatic Polyimide, Polybenzimidazole (PBI), Polybenzimidazolone (PBIL), Polyacrylonitrile (PAN), PAN-poly(vinyl chloride) copolymer (PAN-PVC), PAN-methallyl sulfonate copolymer, Poly(dimethylphenylene oxide) (PPO), Polycarbonate, Polyester, Polytetrafluroethylene PTFE, Poly(vinylidene fluoride) (PVDF), Polypropylene (PP), Polyelectrolyte complexes, Poly(methyl methacrylate) PMMA, Polydimethylsiloxane (PDMS), aromatic, aromatic/aliphatic or aliphatic polyimide urethanes, aromatic, aromatic/aliphatic or aliphatic polyamidimides, crosslinked polyimides or polyarylene ether, polysulfone, polyphenylenesulfone or polyethersulfone, or mixtures thereof. In another embodiment of the invention, MF membranes MFM comprise as the main component at least one polysulfone, polyphenylenesulfone and/or polyethersulfone.

The invention further relates to a process for **preparing** a membrane comprising the modified silica particle of the formula (I) comprising incorporating the modified silica particles into the membrane.

The process for **preparing the membrane** comprising the modified silica particle of the formula (I) typically comprise the following steps:
a) providing a dope solution D comprising at least one polymer P, the modified silica particle and at least one solvent S,
b) adding at least one coagulant C to said dope solution D to coagulate said at least one polymer P from said dope solution D to obtain the membrane M.

The term "adding" in step b) shall include "bringing into contact" and shall not differentiate whether coagulant C or a medium comprising coagulant C is added to the dope solution D or dope solution D is added to coagulant C or a medium comprising coagulant C.

The dope solution D typically comprises 0.1 to 50 wt%, preferably 1 to 30 wt% of the modified silica particles.

**Polymer P** may be selected from polyamide (PA), polyvinylalcohol (PVA), Cellulose Acetate (CA), Cellulose Triacetate (CTA), CA-triacetate blend, Cellulose ester, Cellulose Nitrate, regenerated Cellulose, aromatic, aromatic/aliphatic or aliphatic Polyamide, aromatic, aromatic/aliphatic or aliphatic Polyimide, Polybenzimidazole (PBI), Polybenzimidazolone (PBIL), Polyacrylonitrile (PAN), PAN-poly(vinyl chloride) copolymer (PAN-PVC), PAN-methallyl sulfonate copolymer, polyetherimide (PEI), Polyetheretherketone (PEEK), sulfonated polyetheretherketone (SPEEK), Poly(dimethylphenylene oxide) (PPO), Polycarbonate, Polyester, Polytetrafluroethylene (PTFE), Poly(vinylidene fluoride) (PVDF), Polypropylene (PP), Polyelectrolyte complexes, Poly(methyl methacrylate) PMMA, Polydimethylsiloxane (PDMS), aromatic, aromatic/aliphatic or aliphatic polyimide urethanes, aromatic, aromatic/aliphatic or aliphatic polyamidimides, crosslinked polyimides or polyarylene ether, polysulfone (PSU), polyphenylenesulfone (PPSU) or polyethersulfone (PESU), or mixtures thereof.

In one preferred form the polymer P is polyethersulfone (PESU), polyphenylenesulfone (PPSU), polysulfone (PSU), and poly(vinylidene fluoride) (PVDF). In a more preferred form the polymer P is polyethersulfone (PESU).

**Solvent S** can be any solvent capable of dissolving all components yet allowing coagulation through addition of a coagulant C. Typical solvents S include N-methylpyrrolidone, N,N-dimethyl-2-hydroxypropanoic amide, N,N-diethyl-2-hydroxypropanoic amide, alcohols, preferably divalent alcohols or trivalent alcohols like glycerol, or mixtures thereof. The dope solution D may comprise 60 to 94 % by weight of at least one solvent S.

Suitable **coagulants C** are for example liquid water, water vapor or alcohols.

Manufacturing of membranes M, especially of ultrafiltration membranes M, often includes non-solvent induced phase separation (**NIPS**). In the NIPS process, the polymers used as starting materials (e.g. selected from polyvinyl pyrrolidone, vinyl acetates, cellulose acetates, polyacrylonitriles, polyamides, polyolefines, polyesters, polysulfones, polyethersulfones, polycarbonates, polyether ketones, sulfonated polyether ketones, polyamide sulfones, polyvinylidene fluorides, polyvinylchlorides, polystyrenes and polytetrafluorethylenes, copolymers thereof, and mixtures thereof; preferably selected from the group consisting of polysulfones, polyethersulfones, polyphenylene sulfones, polyvinylidene fluorides, polyamides, cellulose acetate and mixtures thereof, especially including polyether sulfone) are dissolved in at least one solvent S together with any further additive(s) used. In a next step, a porous polymeric membrane is formed under controlled conditions in a coagulation bath. In most cases, the coagulation bath contains water as coagulant, or the coagulation bath is an aqueous medium, wherein the matrix forming polymer is not soluble. The cloud point of the polymer is defined in the ideal ternary phase diagram. In a bimodal phase separation, a microscopic porous architecture is then obtained, and water soluble components (including polymeric additives) are finally found in the aqueous phase.

In case further additives like dope polymers are present that are simultaneously compatible with the coagulant and the matrix polymer(s), segregation on the surface results. With the surface segregation, an enrichment of the certain additives is observed. The membrane surface thus offers new (hydrophilic) properties compared to the primarily matrix-forming polymer, the phase separation induced enrichment of the additive of the invention leading to antiadhesive surface structures.

A preferred process for preparing the membrane comprises the following steps:
a) providing a dope solution D comprising at least one polymer P, the modified silica particle, and at least one solvent S,
a2) optionally heating the mixture until a viscous solution is obtained; typically temperature of the dope solution D is 5-250 °C, preferably 25-150 °C, more preferably 50-90 °C,
a3) optionally stirring of the solution/suspension until a mixture is formed within 1-15 h, typically the homogenization is finalized within 2 h,
a4) optionally removing gases dissolved or present in the solution by applying a vacuum,
b) casting the membrane dope in a coagulation bath to obtain a membrane structure. Optionally the casting can be outlined using a polymeric support (non-woven) for stabilizing the membrane structure mechanically.

In one embodiment, **hollow fiber membranes or multibore membranes** (multichannel hollow fiber membranes) are manufactured by extruding a polymer, which forms a semi-permeable membrane after coagulation through an extrusion nozzle with several hollow needles. A coagulating liquid is injected through the hollow needles into the extruded polymer during extrusion, so that parallel continuous channels extending in extrusion direction are formed in the extruded polymer. Preferably the pore size on an outer surface of the extruded membrane is controlled by bringing the outer surface after leaving the extrusion nozzle in contact with a mild coagulation agent such that the shape is fixed without active layer on the outer surface and subsequently the membrane is brought into contact with a strong coagulation agent. As a result a membrane can be obtained that has an active layer inside the channels and an outer surface, which exhibits no or hardly any resistance against liquid flow. Herein suitable coagulation agents include solvents and/or non-solvents. The strength of the coagulations may be adjusted by the combination and ratio of non-solvent/solvent. Coagulation solvents are known to the person skilled in the art and can be adjusted by routine experiments. An example for a solvent based coagulation agent is N-methylpyrrolidone. Non-solvent based coagulation agents are for instance water, methanol, ethanol, n-propanol, iso-propanol, n-butanol, sec.-butanol, isobutanol, n-pentanol, sec.-pentanol, iso-pentanol, 1,2-ethanediol, ethylene glycol, diethylene glycol, triethylene glycol, propyleneglycol, dipropyleneglycol, glycerol, neopentylglycol, 1,4-butanediol, 1,5-pentanediol, pentaerythritol.

Optionally processes according to the invention can be followed by **further process steps.** For example such processes may include c) oxidative treatment of the membrane previously obtained, for example using sodium hypochlorite. Processes according to the invention may further comprise d) washing of the membrane with water.

The present invention offers various **advantages**: It allows for the effective and efficient chelation and removal from aqueous systems of boron containing compounds B. The modified silica particles are not toxic, degradable, ecologically uncritical and easy to make. The methods according to the invention are easy and economical to carry out. They allow for the effective and efficient removal of boron containing compounds like boric acid from aqueous systems. They are environmental friendly and require only little energy and do not require the application of high pressure. The method according to the invention can be carried out as batch processes or as continuous processes. They are also easy to scale up and can be applied for larger amounts of feed water as well as for smaller amounts of feed water.

The following examples shall further illustrate the present invention.

### Examples

### Example 1 - Preparation of modified silica particles

The 3-aminopropyl-functionalized silica with a functional group (NH₂) loading of 1 mmol/g, a particle size of 40-63 µm, a pore size of 60 Angstrom and a surface area of 550 m²/g was commercially available as white powder.

The 3-aminopropyl-functionalized silica was first dispersed in destilled water to a solid content of 10 wt% via vigorous ultra-sonication for 2 h. Argon-purged glycidol was subsequently introduced dropwise into the silica suspension at ambient temperature (23 °C). The reactant ratio was varied based on their epoxy-to-amine molar ratio, which was pre-set at 1:1, 2:1, 3:1, 5:1 and 10:1 (see Table 1). The mixture was kept at 60 °C in a water bath with stirring to proceed the reaction for 3.5 h. Afterwards, the products were extracted via centrifugation, washed with water to remove the excess glycidol and finally dried at 100 °C to provide the final product.

**Table 1**

| Example | Molar Ratio Epoxy / Amin |
|---|---|
| 1 a | 1 / 1 |
| 1 b | 2 / 1 |
| 1 c | 3 / 1 |
| 1 d | 5 / 1 |
| 1 e | 10 / 1 |

The product was analyzed with XPS core-level spectra of C1s and their de-convolution results of the pristine and diol-functionalized silica particles. The C1s spectrum of the pristine silica was deconvoluted into three peaks at the binding energies of approximately 284.0, 284.7 and 286.0 eV, corresponding to the C-Si, C-C, C-N bonds, respectively. Upon reaction with glycidol, one more peak appears at 287.0 eV, attributed to the C-O groups.

### Example 2 - Batch experiment design

The effects of various parameters in the subsequent examples were studied in batch experiments. A pre-determined amount of silica particles prepared in Example 1 was introduced in a 10 mL boron solution. The solution pH value was kept at neutral (about 6.8) and the boron concentration was fixed at about 11.5 ppm unless otherwise stated. The silica loading, denoted as the molar ratio of the tertiary amines on silica particles to the boron molecules, was varied in the range of 0-100. The ion strength was adjusted by adding NaCl to the boron solution. The mixture was vigorously stirred for a pre-set time duration. Afterwards, the silica particles were isolated via centrifugation and the supernatant was collected for boron analyses by an inductively coupled plasma optical emission spectrometer (ICP-OES).

The boron rejection R was described by the following equation: R (%)=(1 - Cₚ/C_{f})×100% where Cₚ and C_{f} are the boron concentrations of supernatant and feed, respectively.

### Example 3 - Boron rejection

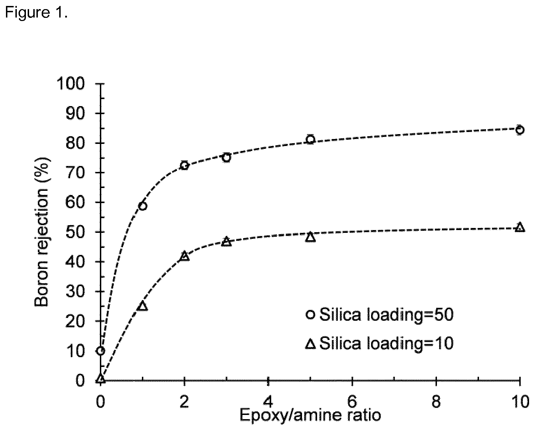

The boron adsorption performance of the five diol-functionalized silica prepared in Example 1 and their starting material (3-aminopropyl-functionalized silica) at silica loadings of 10 and 50 was tested as decribed in Example 2 (chelating temperature at 23 °C). The results are summarized in Figure 1. In summary, the boron rejection of the modified silica particles was excellent.

### Example 4 - Absorption Kinetics

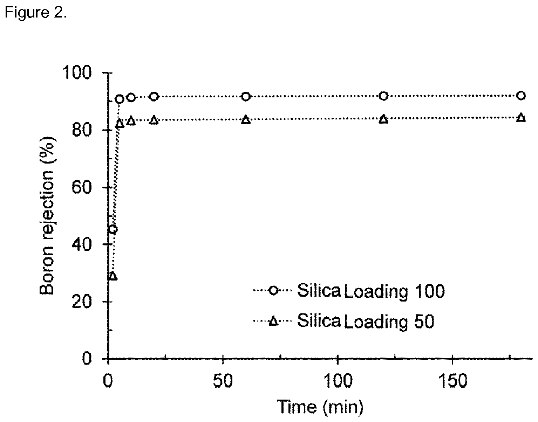

Adsorption of boron was measured as a function of contact time to evaluate the adsorption kinetics using the test as described in Example 2 (chelating temperature of 23 °C). The modified silica particles prepared in Example 1 d was used for the measurements at two loadings and the results are shown in Figure 2.

In summary, the results showed that the modified silica particles absorb the boron very fast. Such a fast kinetics makes it possible to quickly adsorb boron when the boron solution passing through a membrane.

### Example 5 - Ionic strength aqueous system

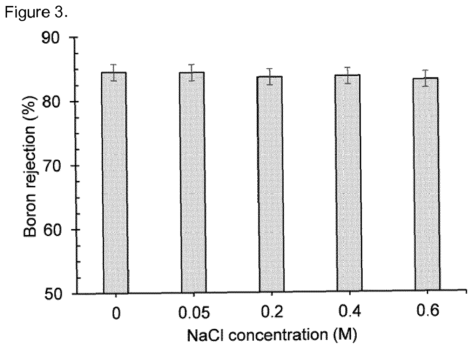

In seawater and produced wastewater, large amounts of cations and anions coexist with boron. Therefore, the effects of ion strength were studied with the modified silica particles prepared in Example 1 d using the tests according to Example 2 (chelating temperature 23 °C). The ion strength was adjusted by adding NaCl to the boron solution at concentrations up to 0.6 mol/l. The Boron rejection was analyzed and the results are summarized in Figure 3. Figure 3 displays that the NaCl concentration has negligibly negative effects on boron rejection.

### Example 6 - Continuous experiment design

This continuous experiments design was based on a bench-scale liquid chromatographic column. The column was packed with 4.0 g of diol-functionalized silica particles from Example 1. Its internal diameter was 1.0 cm and effective length was 12.0 cm. The experiments were performed at a constant flow rate of 0.5 ml/min and an ambient temperature of 23 °C. The boron feed concentration and pH were kept at 50 ppm and neutral, respectively. A circulation pump was employed to regulate the feed flow rate. Boron concentrations in the feed and permeate were analyzed using ICP-OES. Regeneration of the column was carried out using 0.125 M sulfuric acid.

### Example 7 - Multi-cycle measurements

The ability to regenerate adsorbent materials is an important measure of their reusability. An ideal adsorbent material must be easily regenerated in multiple cycles without sacrificing its adsorption efficiency. High stability of the adsorbent material under acidic conditions as well as minimum weight loss during regeneration are key factors for its large scale applications in industries. To evaluate the reusability of the diol-functionalized silica, multi-cycle tests were carried out using the test of Example 6 and the modified silica particles prepared in Example 1 d.

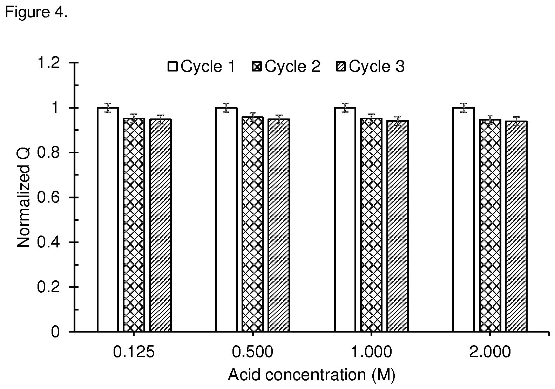

Figure 4 shows the results at different acid concentrations. The boron uptake at equilibrium was normalized based on that of the first cycle ("Q"). The boron uptake decreases to 95% in the second cycle and shows almost no further decreasing in the third cycle. The effectiveness of regeneration was hardly affected by the acid concentration in the range of 0.125-2.0 M.

### Example 8 - Preparation of modified silica particles (P1)

In a four neck-flask equipped with Nitrogen-inlet, stirrer, dropping funnel and reflux-condenser 25 ml of a commercially available suspension of amino-functionalized silica-particles (D_{90≤} 50 nm (DLS), 27 wt% solid-content) in water was diluted with 75 ml of deionized water under stirring. 15 ml of Argon-purged glycidol was subsequently introduced dropwise into the silica-suspension at 23°C. The mixture was then heated to 60°C under stirring for 3,5 h.

100 ml of dry N-Methyl-pyrrolidone (NMP) were added slowly to the suspension under stirring. Then the suspension was transferred into a 500 ml flask and was connected to a rotary evaporator to remove water and residual glycidol. For this purpose, the vacuum was set to 40 mbar and the temperature was gradually raised to 75°C. After reflux stops, these conditions were kept for another 15 minutes.

A small amount of the suspension S1 was dried to determine the solid-content (nanoparticles P1) of the suspension, a value of 6,9 wt.% was determined.

### Example 9 (comparative) - Amino-functionalized nanoparticles (PR) without glycidol

100 ml of dry N-Methyl-pyrrolidone (NMP) were added slowly to a commercially available suspension of amino-functionalized Silica-particles (D_{90 ≤} 50 nm (DLS), 27 wt% solid-content) in water under stirring. Then the suspension was transferred into a 500 ml flask and was connected to a rotary evaporator to remove water. For this purpose, the vacuum was set to 40 mbar and the temperature was gradually raised to 75°C. After reflux stops, these conditions were kept for another 15 minutes.

A small amount of the suspension S2 was dried to determine the solid-content (nanoparticles PR) of the suspension, a value of 6,8 wt.% was determined.

### Example 10 - Preparation of membranes

For the preparation of flat sheet membranes solutions containing 19 g of polyethersulfone (PESU, Ultrason® E 6020), 5 g of Polyvinylpyrrolidone (PVP, Luvitec® K40) and 65 ml of N-methylpyrrolidone (NMP) were prepared by intensive mixing at 60°C. After a homogeneous solution was obtained, different amounts of the suspension S1 or the comparative S2, containing the nanoparticles and NMP were added and mixed for another 12h. The solutions were then degassed for 12h at room temperature. The composition of the solutions for the different membranes is summarized in Table 2.

After that the solution was reheated to 60°C for 2h and casted onto a glass plate with a casting knife (300 µm) at 60°C using an Erichsen Coating machine operating at a speed of 5 mm/min. The membrane film was allowed to rest for 30 seconds before immersion in a water bath at 25°C for 10 minutes. After the membrane had detached from the glass plate, the membrane was carefully transferred into a water bath for 12h.

Afterwards the membrane was transferred into a bath containing 2500 ppm NaOCl at 50°C for 4,5h to remove PVP. After that process the membrane was carefully washed with water at 60°C and one time with a 0,5 wt.% solution of sodium bisulfate to remove active chlorine. After several further washing steps with water the membrane was stored wet until characterization started.

A flat continuous film with micro structural characteristics of UF membranes having dimensions of at least 10cm x 15cm and a thickness of 150 to 200 µm was obtained.

The comparative membrane M1 R is free of the modified silica particles. The comparative membrane M5R and M6R are also free of the modified silica particles, and contain instead amino modified silica particles, which were not modified with glycidol.

**Table 2: Composition of the solutions [wt%]**

| | M1R (comparative) | M2 | M3 | M4 | M5R (comparative) | M6R (comparative) |
|---|---|---|---|---|---|---|
| PESU | 19 | 19 | 19 | 19 | 19 | 19 |
| PVP | 5 | 5 | 5 | 5 | 5 | 5 |
| P1 | - | 0,5 | 0,75 | 1 | - | - |
| PR | - | - | - | - | 0,5 | 1 |
| NMP | 76 | 75,5 | 75,25 | 75 | 75,5 | 75 |

### Example 11 - Membrane Characterisation

Using a pressure cell with an inner diameter of 60 mm, the pure water permeation (PWP) of the membranes was tested using ultrapure water (salt free, filtered by a Millipore UF-system) at a pressure of 1 bar. In a subsequent test, a solution of different PEG-Standards was filtered at a pressure of 0,15 bar. By GPC-measurements of the feed and the permeate, the molecular weight cut-off (MWCO) was determined. The data are summarized in Table 3 and demonstrate that the membranes have comparable general filtration properties.

**Table 3: Pure water permeation (PWP) and molecular weight cut-off (MWCO)**

| | M1R (comparative) | M2 | M3 | M4 | M5R (comparative) | M6R (comparative) |
|---|---|---|---|---|---|---|
| PWP [l/h*bar*m²] | 630 | 650 | 695 | 710 | 680 | 700 |
| MWCO [kD] | 59 | 61 | 64 | 63 | 64 | 65 |

To determine the boron rejection, a solution containing 5 ppm boron (Cf) at a pH of 6,8 was filtered at a pressure of 0,5 bar. Samples of the permeate (Cp) were taken after 10, 20 and 30 minutes and analysed by inductively coupled plasma optical emission spectrometry (ICP-OES). The boron rejection was calculated as R (%)=(1-Cp/Cf)*100%. The data are summarized in Table 4.

The data show that compared to the comparative membranes M1R, M4R and M5R, the membranes according to the invention show increased boron rejection.

**Table 4: Boron rejection [%]**

| | M1R (comparative) | M2 | M3 | M4 | M5R (comparative) | M6R (comparative) |
|---|---|---|---|---|---|---|
| 10 min | 4 | 48 | 52 | 56 | 2 | 2 |
| 20 min | 2 | 44 | 50 | 53 | 3 | 4 |
| 30 min | 2 | 21 | 45 | 50 | 2 | 2 |

## Claims

1. A method for removing a boron containing compound from an aqueous system comprising contacting the aqueous system to a modified silica particle of the formula (I) 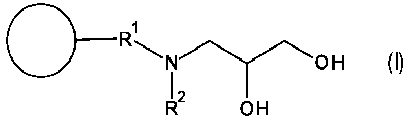 wherein
R¹ is C₁-C₁₂ alkylene, or C₁-C₁₂ heteroalkylene; and
R² is H, -CH₂-CH(OH)-CH₂(OH), or mixtures thereof.

2. The method according to claim 1 wherein the boron containing compound comprises boric acid, salts of boric acid, and/or esters of boric acid.

3. The method according to claim 1 or 2 wherein the contacting is carried out at a pH of 5 to 10.

4. The method according to any of claims 1 to 3 wherein the aqueous system comprises 0.01 to 1000 ppm by weight of the boron containing compounds (calculated as boron).

5. The method according to any of claims 1 to 4 wherein R¹ is -CH₂-CH₂- or -CH₂-CH₂-CH₂-.

6. The method according to any of claims 1 to 5 wherein the modified silica particles are obtainable by reacting glycidol with an amino modified silica particle of the formula (II)

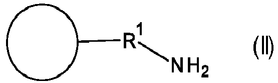

7. The method according claim 6 wherein the molar ratio of the glycidol to the amino groups in the formula (II) is in the range from 1:2 to 20:1.

8. The method according to any of claims 1 to 7 wherein the contacting is made by filtrating the aqueous system with a membrane comprising the modified silica particles.

9. The method according to claim 8 wherein the membrane comprises pores having an average pore diameter of 0.5 nm to 10 µm.

10. The method according to claim 8 or 9 wherein the membrane is an ultrafiltration membrane or a nanofiltration membrane.

11. The method according to any of claims 1 to 10 wherein the modified silica particles have an average particle size of 5 nm to 500 µm.

12. A modified silica particle of the formula (I) as defined in claims 1 to 11.

13. A process for preparing the modified silica particle of the formula (I) as defined in claims 1 to 11 by reacting glycidol with the amino modified silica particle of the formula (II) as defined in claim 6.

14. A membrane comprising the modified silica particle of the formula (I) as defined in claims 1 to 11.

15. A process for preparing a membrane comprising the modified silica particle of the formula (I) as defined in claims 1 to 11 comprising incorporating the modified silica particles into the membrane.
